# FASCICULE DE BREVET EUROPEEN

(11) **EP 1 692 541 B1**
(45) Date de publication et mention de la délivrance du brevet: **22.03.2017**
(21) Numéro de dépôt: 04766870.2
(22) Date de dépôt: 30.09.2004
(51) Int. Cl.: G01S 13/78

(54) **PROCÉDÉ ET DISPOSITIF D'IMPULSIONS APPLICABLE AU DÉCODAGE DE RÉPONSES MODE S DANS UN RADAR SECONDAIRE**
VERFAHREN UND VORRICHTUNG ZUR ERMITTLUNG EINES REFERENZWERTES EINER ANTWORT, INSBESONDERE EINER VON EINEM SEKUNDÄREN RADAR EMPFANGENEN S-MODE ANTWORT
METHOD AND DEVICE FOR DETERMINING A REFERENCE VALUE FOR A RESPONSE, ESPECIALLY AN S-MODE RESPONSE RECEIVED BY A SECONDARY RADAR

(30) Priorité: 24.10.2003 FR 0312492
(43) Date de publication de la demande: 23.08.2006
(73) Titulaire: Thales, 92400 Courbevoie (FR)
(72) Inventeur: BILLAUD, Philippe, Thales Intellectual Property, F-94117 Arcueil (FR); DE VOLDER, Claude, Thales Intellectual Property, F-94117 Arcueil (FR)
(74) Mandataire: Lucas, Laurent Jacques
(86) Numéro de dépôt international: PCT/EP2004/052384
(87) Numéro de publication internationale: WO 2005/040852

(56) Documents cités:
- EP-A- 0 564 322
- EP-A- 0 577 478
- EP-A- 0 577 479
- EP-A- 0 577 480
- FR-A- 2 654 217

## Description

La présente invention s'applique notamment à la surveillance du trafic aérien, et plus particulièrement, aux systèmes coopératifs sol avion qui permettent de situer en distance radiale et en azimut les avions présents dans un certain volume et de les interroger.

Ces systèmes coopératifs comportent un radar de surveillance dit secondaire et des transpondeurs embarqués à bord de véhicules porteurs coopératifs, tels que des avions. Le radar secondaire coopère selon un protocole déterminé avec les transpondeurs (appelés encore répondeurs). Le radar secondaire comporte un interrogateur qui émet des impulsions d'interrogation modulées en amplitude et en phase à la fréquence de 1030 MHz pour établir une communication avec les transpondeurs présents dans le lobe d'émission de son antenne. Ces transpondeurs répondent par des trains d'impulsions modulées en amplitude à la fréquence de 1090 MHz. Ces impulsions sont reçues et traitées par un récepteur du radar secondaire.

Les radars secondaires utilisés dans cette application sont appelés radars de surveillances (connus sous le nom de "Secondary Surveillance Radar" ou SSR dans la littérature anglo-saxonne). La Convention sur l'Aviation Civile Internationale, appelée encore norme OACI (Organisation de l'Aviation Civile Internationale) définit un protocole de communication pour les radars secondaires dans son annexe 10 (Télécommunications Aéronautiques), volume IV (Radar de surveillance et systèmes anti-collision). La norme OACI définit plusieurs modes d'interrogation, tel que les modes A, C et S. Le mode S se distingue des modes A et C en ce qu'il permet une interrogation sélective des avions par l'emploi d'un numéro d'identification propre à chaque avion.

Une réponse mode S se compose d'un préambule formé d'une suite de quatre impulsions dont les positions sont invariables, suivi d'un bloc de données composé de 56 ou 112 valeurs binaires ou bits, les valeurs binaires étant codées sur des intervalles de temps successifs de 1 µs, par une modulation en position d'impulsion. Les 24 derniers bits du bloc de données forment un code de redondance cyclique (CRC) et les autres bits forment un message. Le CRC permet un décodage sans erreur du message lorsqu'il a subi une détérioration sur une zone de moins de 24 µs.

Il s'avère que la détérioration du message dépasse souvent les 24 µs notamment dans les cas de multitrajets (où elle peut atteindre la totalité du message) et dans les cas d'imbrication d'une réponse en mode S avec plusieurs réponses en mode classique A ou C.

Les phénomènes multitrajets se produisent fréquemment en zone terminale lorsque l'avion est près du sol et de l'interrogateur du radar secondaire. Ils sont dus à des réflexions de la réponse du transpondeur sur des bâtiments et sur le sol qui arrivent décalées dans le temps par rapport à la réponse directe et perturbent celle-ci.

La demande de brevet français n° 89 14416 "dispositif de détection de signaux de répondeurs interrogés par un radar secondaire en présence de phénomène de multitrajets" (FR 2.654.217) déposée le 3 novembre 1989 décrit un procédé de détermination de la puissance moyenne d'une réponse mode S par analyse de l'histogramme des valeurs des impulsions possibles pendant la durée d'une réponse mode S. Ce procédé est mis en oeuvre par un dispositif de détection d'impulsions de données permettant le décodage de réponses mode S en présence de phénomène de multitrajets.

Plus précisément, la position des impulsions de préambule est utilisée pour générer des signaux de cadencement. Les signaux de cadencement permettent de recueillir trois échantillons du signal de réception par intervalle de 0,5 µs, c'est à dire par position potentielle d'une impulsion du bloc de données. Un premier échantillon est pris au milieu de l'intervalle, et les deux autres encadrent le premier. Les valeurs des premiers échantillons sont reportées dans un histogramme, avec une pondération calculée à partir des deux autres échantillons. Une valeur de référence de la réponse mode S est alors déterminée à partir de l'histogramme, la valeur de référence reflétant le niveau d'amplitude des impulsions de données de la réponse mode S. Une impulsion de données est détectée lorsque la valeur de l'échantillon au milieu d'un intervalle de 0,5 µs est proche de la valeur de référence.

Toutefois, si la réponse mode S est imbriquée avec une autre réponse mode S, une majorité des échantillons est altérée. Ceci affecte en particulier les échantillons pris au milieu des intervalles de 0,5 µs, dont les valeurs sont utilisées non seulement pour détecter des impulsions de données individuelles, mais aussi pour déterminer la valeur de référence. Par conséquent, ce procédé est inadapté en cas d'imbrication de deux réponses mode S, et plus généralement en cas de pollution par un multitrajet ou par une imbrication avec un signal dont la puissance est du même ordre de grandeur ou supérieure à la puissance de la réponse sous analyse.

L'invention a notamment pour but d'établir une valeur de référence d'une réponse, et ce même en présence d'une pollution importante de la réponse, notamment lorsque deux réponses en mode S sont imbriquées.

A cet effet, l'invention a notamment pour objet un procédé pour déterminer une valeur de référence d'une réponse contenue dans un signal de réception d'un radar secondaire, la réponse comprenant des impulsions agencées selon un protocole déterminé, procédé dans lequel :
- on repère dans le signal de réception la position des impulsions présentes ;
- on détermine des positions potentielles d'impulsions de la réponse considérée ;
- on sélectionne des fenêtres temporelles, chaque fenêtre temporelle repérant dans le signal de réception une partie stable d'une impulsion dont la position a été repérée et dont la position repérée coïncide avec une position potentielle déterminée, la valeur de référence étant la valeur prise majoritairement par des échantillons du signal de réception, ces échantillons étant situés dans les fenêtres temporelles sélectionnées.

Ainsi, les échantillons ne sont pas systématiquement pris à la même position, c'est à dire au milieu de l'intervalle de 0,5 µs. Seuls les échantillons présumés clairs dans une impulsion sont sélectionnés.

Selon un mode de mise en oeuvre avantageux, en présence d'imbrication entre plusieurs réponses, lorsqu'on sélectionne les fenêtres temporelles pour déterminer la valeur de référence, on limite la sélection aux fenêtres temporelles situées dans une partie non imbriquée de la réponse considérée.

Ceci permet de déterminer des valeurs de références de plusieurs réponses lorsque plusieurs réponses sont imbriquées.

Selon un mode de mise en oeuvre avantageux, on repère la position des impulsions présentes par détection de fronts montants et/ou descendants dans le signal de réception.

Selon un mode de mise en oeuvre avantageux, lié à l'utilisation d'un codage en position, les impulsions isolées ayant une largeur déterminée, si le signal de réception comporte une impulsion semblant avoir une durée supérieure à la largeur déterminée, on repère non seulement la position de cette impulsion, mais aussi la position d'une impulsion masquée, la position de l'impulsion masquée étant déduite du front montant ou du front descendant de l'impulsion longue auquel on ajoute ou on retire la largeur déterminée.

Selon un autre mode de mise en oeuvre avantageux, en présence d'imbrication entre plusieurs impulsions, la position de la première impulsion est repérée à partir d'un front montant et la position de la dernière impulsion est repérée à partir d'un front descendant.

Selon un mode de mise en oeuvre avantageux, on teste la coïncidence entre la position des impulsions présentes dans le signal de réception d'une part, et la position d'impulsions de données potentielles d'autre part, en utilisant une tolérance fonction de la précision du repérage de la position des impulsions présentes dans le signal de réception.

L'invention a aussi pour objet un procédé de détection d'impulsions d'une réponse dans lequel :
- on détermine une valeur de référence,
- on détermine la valeur moyenne des échantillons situés dans une fenêtre temporelle sélectionnée ;
- on détecte une impulsion chaque fois que la valeur moyenne déterminée appartient à une certaine plage de valeurs centrée autour de la valeur de référence déterminée.

L'invention a aussi pour objet un dispositif de détermination d'une valeur de référence d'une réponse contenue dans un signal de réception d'un radar secondaire, la réponse comprenant des impulsions agencées selon un protocole déterminé, dispositif comprenant au moins :
- des moyens pour repérer dans le signal de réception la position des impulsions présentes ;
- des moyens pour déterminer des positions potentielles d'impulsions de la réponse considérée ;
- des moyens pour sélectionner des fenêtres temporelles, chaque fenêtre temporelle repérant dans le signal de réception une partie stable d'une impulsion dont la position a été repérée et dont la position repérée coïncide avec une position potentielle déterminée, la valeur de référence étant la valeur prise majoritairement par des échantillons du signal de réception, ces échantillons étant situés dans les fenêtres temporelles sélectionnées.

L'invention présente l'avantage d'augmenter le rapport signal à bruit et d'augmenter le rapport signal à brouilleur par rapport aux techniques connues, grâce à l'utilisation d'un plus grand nombre d'échantillons de signal de réception. De plus, le procédé selon l'invention est simple à mettre en oeuvre.

D'autres caractéristiques et avantages de l'invention apparaîtront à la lecture de la description détaillée suivante présentée à titre d'illustration non limitative et faite en référence aux figures annexées, lesquelles représentent :
- la figure 1, le format d'une réponse mode S selon la norme OACI ;
- la figure 2, un exemple d'impulsions de données d'une réponse mode S ;
- la figure 3, un exemple de signal généré dans le cadre d'un exemple de mise en oeuvre pratique de l'invention, le signal comportant une fenêtre temporelle repérant dans le signal de réception une partie stable d'une impulsion dont la position a été repérée ;
- la figures 4, un exemple de signal de réception d'un extrait d'une réponse mode S, un exemple de signal généré dans le cadre d'un exemple de mise en oeuvre pratique de l'invention, le signal repérant dans le signal de réception la position des impulsions présentes, et des exemples de signaux générés dans des modes de réalisations avantageux de l'invention ;
- la figure 5, un autre exemple de signal de réception, en présence d'imbrication de deux impulsions provenant de transpondeurs différents, un exemple de signal généré dans le cadre d'un exemple de mise en oeuvre pratique de l'invention, et des exemples de signaux générés dans des modes de réalisations avantageux de l'invention ;
- la figure 6, un exemple de signal généré dans le cadre d'un exemple de mise en oeuvre pratique de l'invention, lors de la détermination des positions potentielles d'impulsions de données d'une réponse mode S considérée ;
- la figure 7, un exemple d'utilisation, dans le cadre d'un mode de réalisation avantageux de l'invention, du signal de réception résultant d'une d'imbrication de deux réponses mode S.

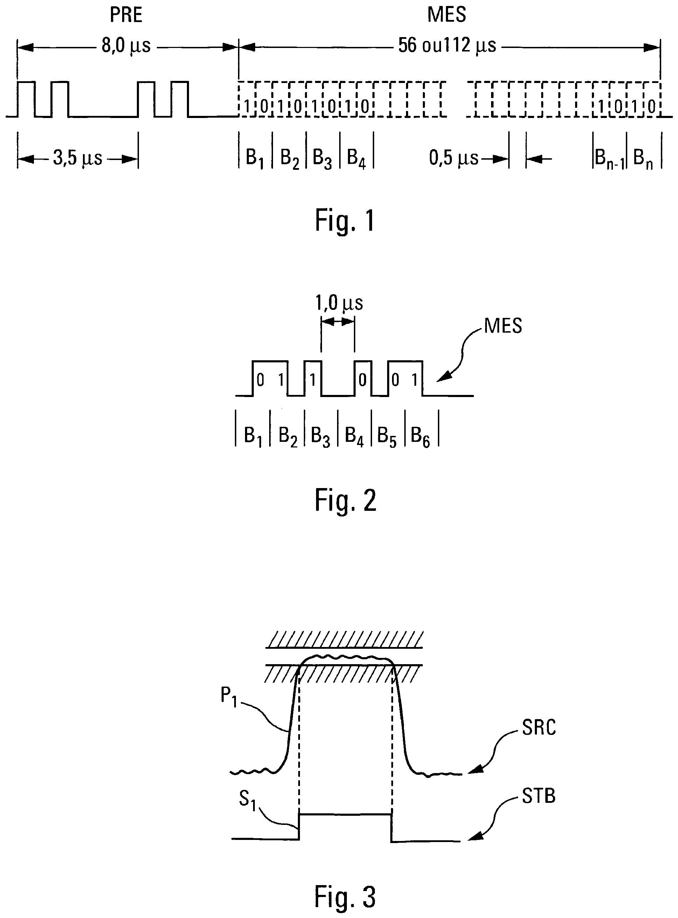

On se réfère maintenant à la figure 1 sur laquelle est représenté le format d'une réponse mode S selon la norme OACI. Une réponse mode S comprend un préambule PRE et des données MES. Le préambule comprend quatre impulsions émises à des positions déterminées par la norme OACI, à laquelle l'homme du métier pourra se reporter. Les impulsions de préambule ont une largeur normalisée de 0,5 µs.

Le préambule est suivi des données MES. Les données MES comportent n valeurs binaires, référencées B₁, B₂ ... Bₙ. Selon le type de réponse (courte ou longue), le nombre de valeurs binaire n peut être 56 ou 112. Chaque valeur binaire est codée sur une période de 1 µs. Ainsi, les données d'une réponse mode S occupent 56 ou 112 µs.

Le codage des données est un codage en position. Pour chaque valeur binaire, une impulsion de donnée est présente en début ou en fin d'une période de 1 µs, la position de cette impulsion en début ou en fin de période permettant de coder pour une valeur binaire 0 ou 1. Sur chaque période de 1 µs, l'impulsion de donnée occupe une largeur normalisée de 0,5 µs.

On se réfère maintenant à la figure 2 sur laquelle est représenté un exemple du début des données d'une réponse mode S. Dans cet exemple, les premières valeurs binaires B₁ à B₆ sont respectivement 0, 1, 1, 0, 0, 1. Le temps maximum pendant lequel aucune impulsion de données est émise intervient lorsqu'une valeur 0 succède à une valeur 1 (entre B₃ et B₄). Ce temps est de 1 µs. De même, la temps maximum pendant lequel une impulsion de donnée est émise intervient lorsqu'une valeur 1 succède à une valeur 0 (entre B₅ et B₆). Ce temps est aussi de 1 µs, c'est à dire deux fois 0,5 µs, l'impulsion de donnée étant à cheval sur deux périodes de 1 µs.

On se réfère maintenant à la figure 3. On élabore un signal de réception SRC, ce signal étant échantillonné à une période supérieure à la durée d'une impulsion de données. Les dispositifs élaborant les signaux de réception sont en eux-même connus et ne seront pas décrits. Le signal de réception SRC est représentatif de la puissance reçue par l'antenne, et s'appelle de façon conventionnelle LOG∑. La fréquence d'échantillonnage du signal de réception SRC peut être de 20 MHz, ce qui correspond à une période d'échantillonnage de 50 ns. Ceci permet de disposer de l'ordre de 10 échantillons dans une impulsion de données sur une période de 1 µs.

Selon un mode de réalisation pratique de l'invention, on génère un signal STB permettant de repérer les parties stables en niveau des impulsions présentes dans le signal de réception. Ainsi, on génère un créneau S₁ dans le signal STB, ce créneau étant associé à l'impulsion P₁ présente dans le signal SRC.

Pour repérer les parties stables d'une impulsion, différents principes peuvent être employés. Par exemple, une impulsion peut être réputée stable lorsque la dispersion des puissances des échantillons par rapport à la moyenne des puissances est bornée par une valeur de dispersion maximale. Plusieurs paramètres peuvent être pris en compte pour déterminer la valeur de la dispersion maximale, c'est à dire pour définir la stabilité d'une impulsion. La valeur de la dispersion maximale peut dépendre notamment de la tolérance en puissance que la norme OACI autorise pour un transpondeur. On peut ajouter une marge à cette tolérance en puissance, cette marge rendant compte du niveau de bruit du signal de réception et des erreurs de mesures du récepteur du radar secondaire. Selon un mode de réalisation pratique, la dispersion maximale peut être tabulée en fonction de la puissance moyenne, de manière à rendre compte de l'évolution du bruit avec la puissance du signal, le niveau de bruit augmentant avec la puissance du signal de réception.

On peut repérer les parties stables d'une impulsion en utilisant un autre procédé, tel que celui décrit dans la demande de brevet n° 92 03868 "procédé et dispositif de détection de mélanges d'impulsions reçues par un radar secondaire" (FR 2 689 250). Selon ce procédé, on utilise non seulement le signal de puissance, mais aussi un signal d'écartométrie, noté de façon conventionnelle Δ/∑ (désigné encore par l'acronyme OBA dans la littérature anglo-saxonne).

D'une manière générale, le repérage des parties stables d'une impulsion est basé sur l'analyse de la forme d'un ou plusieurs signaux de réception, chaque signal de réception comportant plusieurs échantillons par impulsion. Plus précisément, on recherche si les échantillons d'un signal sont compris à l'intérieur d'une fourchette déterminée. L'étendue de cette fourchette peut être un paramètre tabulé en fonction du niveau du signal.

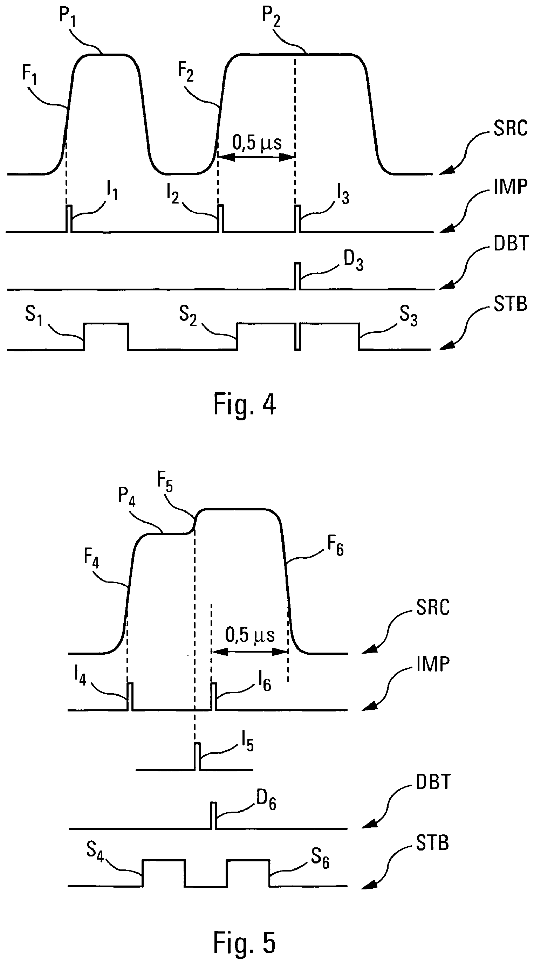

On se réfère maintenant à la figure 4 sur laquelle est représenté un exemple de signal de réception correspondant à la séquence de valeurs binaires B₄, B₅, B₆ représentée à la figure 2. Le signal de réception SRC comporte deux impulsions P₁, P₂. Selon l'invention, on analyse la forme du signal de réception pour repérer la position des impulsions présentes dans le signal de réception. Par exemple, les impulsions peuvent être repérées à partir de leur front montant et/ou descendant. Selon un mode de mise en oeuvre pratique de l'invention, on génère un signal de repérage des impulsions IMP. Dans cet exemple, les positions des impulsions P₁ et P₂ sont repérées à partir de leurs fronts montants respectifs F₁ et F₂. Le signal de repérage IMP comporte ainsi des indications I₁ et I₂ du début de ces impulsions.

Les deux impulsions P₁ et P₂ correspondent en fait à trois valeurs binaires. L'impulsion P₁ correspond à la valeur binaire B₄. L'impulsion P₂ correspond à la fois aux valeurs binaires B₅ et B₆. Il manque donc une information dans le signal de repérage IMP permettant de traiter la valeur binaire B₆. Ceci est lié au codage en position, dans lequel une seule impulsion d'une durée double à la durée d'une impulsion de donnée isolée est générée lors d'une succession particulière de valeurs binaires 0-1.

Selon un mode de réalisation avantageux, lié à l'utilisation d'un codage en position, on repère non seulement la position des impulsions présentes dans le signal de réception, mais aussi la position d'impulsions masquées dans les situations où une seule impulsion est émise pour deux valeurs binaires. Par exemple, lorsqu'on repère la position des impulsions à partir des fronts montants, on repère la position d'une impulsion masquée lors d'une succession de valeurs binaires 0-1, le front montant de l'impulsion masquée étant positionné en début de la période de 1 µs correspondant à la valeur binaire 1.

Pour repérer la position d'une impulsion masquée, on identifie les impulsions longues parmi les impulsions présentes dans le signal de réception, une impulsion longue étant une impulsion dont la durée est supérieure à une largeur normale d'une impulsion codant pour une valeur binaire isolée. Pour chaque impulsion longue identifiée, on génère non seulement un signal de repérage de l'impulsion longue, mais aussi un signal de repérage d'une impulsion masquée. La position du signal de repérage de l'impulsion masquée peut être déduit du front montant ou du front descendant de l'impulsion longue.

Par exemple lorsque les impulsions sont repérées par leurs fronts montants, on ajoute dans le signal de repérage un front montant 0,5 µs après le front montant de chaque impulsion longue. De manière alternative, on ajoute dans le signal de repérage un front montant 0,5 µs avant le front descendant de chaque impulsion longue.

D'une manière générale, les impulsions de données codant pour une valeur binaire isolée ayant une largeur déterminée, si le signal de réception comporte une impulsion semblant avoir une durée supérieure à la largeur déterminée, on repère non seulement la position de cette impulsion, mais aussi la position d'une impulsion masquée, la position de l'impulsion masquée étant déduite du front montant ou du front descendant de l'impulsion longue auquel on ajoute ou on retire la largeur déterminée.

Dans cet exemple appliqué au décodage de réponses mode S, cette largeur déterminée est de 0,5 µs. Ainsi, le signal de repérage IMP comporte une indication I₃ correspondant à un front montant d'une impulsion masquée, ce front montant permettant de repérer la position d'une impulsion de données masquée, cette impulsion de données correspondant à la valeur binaire B₆.

On se réfère maintenant à la figure 5 sur laquelle est représenté un exemple de signal de réception en présence d'imbrication de deux impulsions provenant par exemple de transpondeurs différents ou de phénomènes de multitrajets. Cette imbrication se traduit par la présence d'une impulsion P₄ dans le signal de réception SRC, l'impulsion P₄ comportant deux fronts montants consécutifs F₄ et F₅ et un front descendant F₆.

Les fronts montants F₄ et F₅ peuvent être utilisés pour repérer respectivement deux positions I₄ et I₅ d'impulsions. Le front descendant F₆ peut être utilisé pour repérer une position d'impulsion I₆, la position repérée étant décalée d'une largeur normale d'impulsion de données (c'est à dire 0,5 µs) par rapport au front descendant, de manière à repérer la position théorique du début de l'impulsion.

De préférence, en présence d'imbrication entre plusieurs impulsions, la position de la première impulsion est repérée à partir d'un front montant et la position de la dernière impulsion est repérée à partir d'un front descendant. On utilise ainsi les parties non imbriquées des impulsions pour en repérer la position, ce qui apporte une meilleure précision. Dans l'exemple de la figure 5, on effectue ainsi un repérage à partir du front descendant F₆, ce qui permet d'indiquer une impulsion à la position I₆ dans le signal de repérage IMP.

Dans ce mode de réalisation avantageux, le front montant F₅ n'est pas utilisé. En d'autres termes, le signal de repérage IMP comporte les indications de position I₄ et I₆ et non l'indication de position I₅. En effet, les indications de position I₅ et I₆ correspondent à une même impulsion.

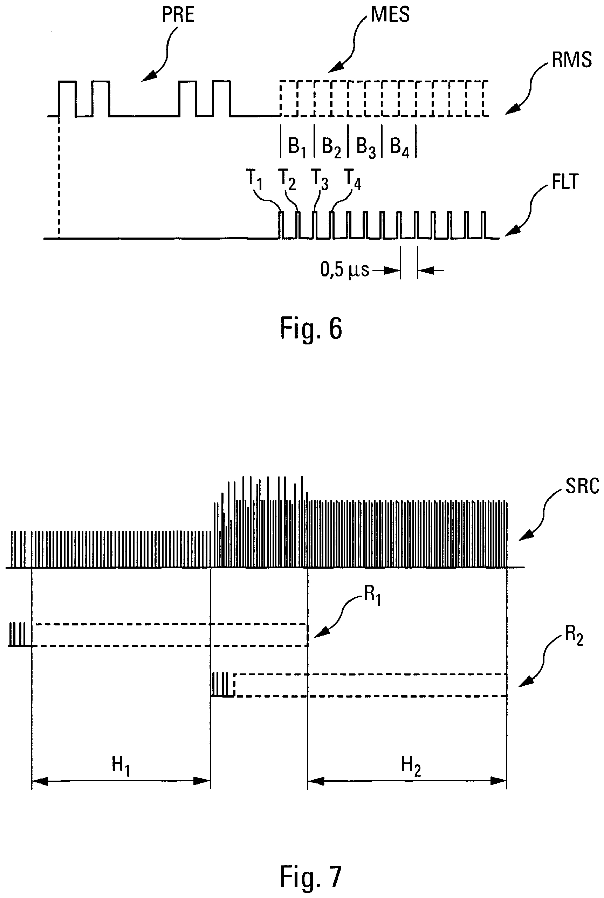

On se réfère maintenant à la figure 6. Lorsqu'une réponse dont on cherche les impulsions de données est identifiée dans le signal de réception, on détermine des positions potentielles d'impulsions de données de la réponse considérée. Une réponse, par exemple en mode S, peut être identifiée à partir de ses impulsions de préambule.

Il existe d'autres procédés pour identifier des réponses mode S dans un signal de réception. On peut par exemple citer le procédé décrit dans la demande de brevet français n° 03 11893 "procédé de pré-détection de réponses dans un radar secondaire et application à la détection de réponses mode S". Selon ce procédé, pour identifier une réponse mode S, on reconnaît une séquence d'impulsions de 56 ou 112 µs correspondant à des impulsions de données d'une réponse mode S courte ou longue, l'intervalle de temps séparant une impulsion de celle qui la précède ne pouvant excéder 1 µs d'après la norme OACI.

Dans cet exemple, la réponse considérée RMS est une réponse mode S. Les impulsions de données peuvent être positionnées soit au début soit à la fin d'une période de 1 µs. Par conséquent, il y a deux positions potentielles par période de 1 µs, c'est à dire une impulsion potentielle toutes les 0,5 µs. Selon un mode de réalisation pratique, on génère un signal de filtrage FLT permettant de repérer les positions potentielles T₁, T₂, T₃, T₄ des impulsions de données de la réponse considérée.

On détermine ensuite une valeur de référence de la réponse considérée. La valeur de référence est une valeur moyenne d'un signal de réception en présence d'une impulsion de donnée. La valeur de référence peut être basée sur le signal LOGE par exemple. La valeur de référence peut être basée sur un autre signal. Par exemple, on peut déterminer une valeur de référence du signal d'écartométrie. Ceci permet d'évaluer la position azimutale (par rapport à l'axe radioélectrique du radar secondaire) du transpondeur ayant émis la réponse. On peut aussi déterminer une valeur de référence du signal sur la voie différence, appelé de façon conventionnelle signal LOGΔ.

La détermination d'une ou plusieurs valeurs de référence peut être utilisée pour effectuer un décodage correct des bits du message d'une réponse mode S. Normalement, toutes les impulsions qui appartiennent à une seule réponse sont au même niveau dans le signal de réception (puissance sur la voie somme, puissance sur la voie différence, écartométrie, fréquence de la réponse du transpondeur). La détermination d'une ou plusieurs valeurs de référence permet de comparer le niveau d'un signal de réception à la valeur de référence correspondant à ce signal de réception. En fonction du résultat de cette comparaison, une impulsion peut non être reconnue comme appartenant ou non à la réponse considérée.

Pour déterminer une valeur de référence d'un signal de réception quelconque (LOG∑, LOGΔ, ...), on sélectionne des fenêtres temporelles, chaque fenêtre temporelle repérant dans le signal de réception une partie stable d'une impulsion dont la position a été repérée et dont la position repérée coïncide avec une position potentielle déterminée, la valeur de référence étant la valeur prise majoritairement par des échantillons du signal de réception, ces échantillons étant situés dans les fenêtres temporelles sélectionnées.

Selon un mode de réalisation pratique, on utilise le signal de repérage IMP, lequel repère la position des impulsions présentes (impulsions visibles ou masquées) dans le signal de réception. On utilise le signal de filtrage FLT pour ne retenir que les impulsions dont la position repérée coïncide avec une position potentielle d'impulsion de donnée. Ensuite, on sélectionne les échantillons du signal de réception SRC situés dans les fenêtres du signal STB qui correspondent aux impulsions retenues. On peut déterminer ensuite la valeur de référence à partir d'un histogramme des échantillons sélectionnés. En d'autres termes, la valeur de référence peut être déterminée en sélectionnant le niveau pris majoritairement par les échantillons sélectionnés du signal de réception. Par exemple, la valeur de référence peut être le pic de l'histogramme. Selon un autre mode de mise en oeuvre, la valeur de référence peut être la moyenne des valeurs de l'histogramme qui appartiennent à une plage de valeurs atteintes un nombre de fois égal au moins à la moitié du nombre de fois où est atteinte la valeur du niveau majoritaire.

Selon un mode de réalisation avantageux, on teste la coïncidence entre la position des impulsions présentes dans le signal de réception d'une part, et la position d'impulsions de données potentielles d'autre part, en utilisant une tolérance fonction de la précision du repérage de la position des impulsions présentes dans le signal de réception. Selon un mode de réalisation pratique, on génère un signal de doute DBT, indiquant un doute sur la position d'une impulsion repérée dans le signal de repérage IMP. Le signal de doute DBT peut par exemple (voir figure 4) indiquer un doute D₃ sur la position des impulsions masquées I₃, lesquelles sont déterminées de manière indirecte (en utilisant le format de la réponse considérée). Le signal de doute DBT peut aussi (voir figure 5) indiquer un doute D₆ sur la position d'une impulsion I₆, lorsque deux méthodes de détermination de la position de cette impulsion ne donnent pas les mêmes résultats (positions I₅ et I₆).

Selon un mode de réalisation pratique, le signal de filtrage FLT comporte des fenêtres temporelles, par exemple de 50 ns à 100 ns, dont la largeur est plus importante en présence d'un doute dans le signal de doute DBT. Ainsi, le signal de filtrage FLT permet d'effectuer le test de coïncidence avec une tolérance variable.

Ainsi, on obtient une valeur de référence avec une précision importante, malgré la présence de bruit ou de pollution, grâce à un filtrage préalable des échantillons au niveau de chaque impulsion. Le procédé peut être amélioré en ajoutant un filtrage au niveau de la réponse, et non seulement au niveau des échantillons.

On se réfère à la figure 7 sur laquelle est représenté un signal lors d'une imbrication entre deux réponses mode S. Le début H₁ de la première réponse R₁ est une zone dite claire, c'est à dire non imbriquée avec d'autres réponse. La fin H₂ de la dernière réponse R₂ est aussi une zone claire. Selon un mode de réalisation avantageux, en présence d'imbrication entre plusieurs réponses, lorsqu'on sélectionne les fenêtres temporelles pour déterminer la valeur de référence, on limite la sélection aux fenêtres temporelles situées dans une partie non imbriquée de la réponse considérée. Selon le mode de réalisation pratique décrit, le signal de filtrage FLT est limité à la zone temporelle H₁ lorsqu'on considère la première réponse R₁. Ceci permet de disposer d'un histogramme présentant un pic étroit, même en présence d'imbrication entre deux réponses mode S.

Le procédé décrit peut être mis en oeuvre en utilisant des moyens connus de l'homme du métier, tels que des circuits logiques câblés ou des circuits programmés. Les signaux IMP, DBT, FLT, décrits à titre d'exemple, peuvent être des signaux numériques ou analogiques. De préférence, ces signaux sont échantillonnés à la période du signal de réception SRC.

Si deux réponses mode S sont imbriquées, l'invention permet non seulement de déterminer des valeurs de référence de la première réponse, mais aussi de déterminer des valeurs de référence de la seconde réponse. Le filtrage des parties non imbriquées des réponses permet de sélectionner uniquement les échantillons :
- appartenant à une seule réponse, et
- non pollués par d'autres signaux.

On dispose ainsi de valeurs de référence précises, déterminée à partir d'échantillons sélectionnés, mais suffisamment nombreux pour en faire une moyenne fiable.

Bien entendu l'invention peut s'appliquer à d'autres domaines que la surveillance du trafic aérien. On peut citer par exemple une application militaire de l'invention, dans laquelle des radars secondaires sont embarqués à bord de véhicules porteurs (par exemple ACAS), ces radars secondaires fonctionnant sans émettre de message d'interrogation (ou très rarement) mais en analysant des messages émis de façon spontanée ou en réponse à des interrogations d'autres radars secondaires, ces messages ayant le format d'une réponse normalisée. On peut aussi citer une application civile de l'invention, dans laquelle le radar secondaire est embarqué dans un véhicule porteur tel qu'un aéronef ou un bateau, le radar secondaire embarqué étant utilisé comme radar anti-collision.

## Revendications

1. Procédé pour déterminer une valeur de référence d'une réponse contenue dans un signal de réception d'un radar secondaire, plusieurs réponses étant imbriquées dans ledit signal de réception, chaque réponse comprenant un préambule comportant des impulsions émises à des positions déterminées et des impulsions de données agencées selon un protocole déterminé, le signal de réception (SRC), correspondant au signal analogique reçu par le radar, étant échantillonné à une période inférieure à la durée d'une impulsion, ledit procédé comprenant les étapes suivantes où:
- on repère (IMP), dans le signal de réception (SRC), la position de chaque impulsion de donnée présente par détection de fronts montants et/ou descendants dans le signal de réception (SRC) et en présence d'imbrication entre plusieurs impulsions, la position de la première impulsion de donnée est repérée à partir d'un front montant et la position de la dernière impulsion de donnée est repérée à partir d'un front descendant ;
- on repère (STB) des parties stables en niveau des impulsions de donnée présentes dans le signal de réception (SRC),
- pour chaque réponse contenue dans le signal de réception (SRC), on détermine (FLT) des positions potentielles d'impulsions de donnée de la réponse considérée situées dans des zones non imbriquées de ladite réponse considérée ;
- pour chaque réponse contenue dans le signal de réception (SRC), on sélectionne des fenêtres temporelles, chaque fenêtre temporelle repérant dans le signal de réception une partie stable (STB) d'une impulsion de donnée dont la position a été repérée (IMP) et dont la position repérée coïncide avec une position potentielle (FLT) déterminée,
- la valeur de référence étant la valeur prise majoritairement par tous les échantillons du signal de réception (SRC) situés dans les fenêtres temporelles sélectionnées.

2. Procédé selon la revendication précédente dans lequel la réponse comprend des impulsions de donnée isolées ayant une largeur déterminée, si le signal de réception comporte une impulsion semblant avoir une durée supérieure à la largeur déterminée, on repère non seulement la position de cette impulsion, mais aussi la position d'une impulsion masquée, ladite position de l'impulsion masquée étant déduite du front montant ou du front descendant de l'impulsion analogique semblant avoir une durée supérieure à la largeur déterminée auquel on ajoute ou on retire la largeur déterminée,
Et dans lequel on teste la coïncidence entre la position des impulsions présentes dans le signal de réception d'une part, et la position d'impulsions de données potentielles de la réponse considérée d'autre part, en utilisant une tolérance fonction de la précision du repérage de la position des impulsions présentes dans le signal de réception (SRC).

3. Procédé selon l'une des revendications précédentes dans lequel la valeur de référence est basée sur un signal d'écartométrie.

4. Procédé de décodage d'une réponse contenue dans un signal de réception d'un radar secondaire, plusieurs réponses étant imbriquées dans ledit signal de réception et chaque réponse comprenant des impulsions de donnée agencées selon un protocole déterminé, ledit procédé étant **caractérisé en ce que**, pour chaque réponse imbriquée :
- on détermine une valeur de référence selon l'une quelconque des revendications précédentes en sélectionnant des fenêtres temporelles situées dans une partie non imbriquée de la réponse considérée,
- on sélectionne une fenêtre temporelle et on détermine la valeur moyenne des échantillons situés dans ladite fenêtre temporelle sélectionnée ;
- on décode une impulsion de donnée chaque fois que la valeur moyenne déterminée appartient à une certaine plage de valeurs centrée autour de la valeur de référence déterminée.

5. Dispositif de détermination d'une valeur de référence d'une réponse contenue dans un signal de réception (SRC) d'un radar secondaire, plusieurs réponses étant imbriquées dans ledit signal de réception, la réponse comprenant des impulsions de donnée agencées selon un protocole déterminé, ledit dispositif comprenant au moins :
- des moyens pour repérer (IMP) dans le signal de réception (SRC) la position des impulsions de donnée présentes par détection de fronts montants et/ou descendants dans le signal de réception ;
- des moyens pour repérer (STB) des parties stables en niveau des impulsions présentes dans le signal de réception (SRC),
- des moyens pour déterminer (FLT), pour chaque réponse contenue dans le signal de réception, des positions potentielles d'impulsions de la réponse considérée dans les parties non imbriquées de ladite réponse considérée ;
des moyens pour sélectionner des fenêtres temporelles, chaque fenêtre temporelle repérant dans le signal de réception une partie stable (STB) d'une impulsion de donnée dont la position a été repérée et dont la position repérée coïncide avec une position potentielle déterminée du bloc de données de la réponse , la valeur de référence étant la valeur prise majoritairement par tous les échantillons du signal de réception situés dans les fenêtres temporelles sélectionnées.

## Patentansprüche

1. Verfahren zum Bestimmen eines Referenzwertes einer Antwort, die in einem Empfangssignal eines sekundären Radars enthalten ist, wobei mehrere Antworten in dem Empfangssignal verschachtelt sind, wobei jede Antwort eine Präambel umfasst, die an bestimmten Positionen ausgesendete Pulse und gemäß einem bestimmten Protokoll angeordnete Datenpulse umfasst, wobei das dem vom Radar empfangenen analogen Signal entsprechende Empfangssignal (SRC) über eine Periode abgetastet wird, die kürzer ist als die Dauer eines Pulses, wobei das Verfahren die folgenden Schritte beinhaltet:
- Identifizieren (IMP), in dem Empfangssignal (SRC), der Position jedes vorhandenen Datenpulses durch Erkennen von ansteigenden und/oder abfallenden Flanken in dem Empfangssignal (SRC) und, in Anwesenheit einer Verschachtelung zwischen mehreren Pulsen, Identifizieren der Position des ersten Datenpulses auf der Basis einer ansteigenden Flanke und Identifizieren der Position des letzten Datenpulses auf der Basis einer abfallenden Flanke;
- Identifizieren (STB) von stabilen Teilen an den Datenpulsen, die in dem Empfangssignal (SRC) vorhanden sind;
- Feststellen (FLT), für jede in dem Empfangssignal (SRC) enthaltene Antwort, von potentiellen Positionen von Datenpulsen der betrachteten Antwort, die sich in den nicht verschachtelten Zonen der betrachteten Antwort befinden;
- Auswählen, für jede in dem Empfangssignal (SRC) enthaltene Antwort, von Zeitfenstern, wobei jedes Zeitfenster in dem Empfangssignal einen stabilen Teil (STB) eines Datenpulses identifiziert, dessen Position identifiziert (IMP) wurde und dessen Position mit einer bestimmten potentiellen Position (FLT) übereinstimmt;
- wobei der Referenzwert der Wert ist, den die meisten aller in den gewählten Zeitfenstern befindlichen Samples des Empfangssignals (SRC) annehmen.

2. Verfahren nach dem vorherigen Anspruch, wobei die Antwort isolierte Datenpulse mit einer bestimmten Breite umfasst, wenn das Empfangssignal einen Puls umfasst, der eine Dauer zu haben scheint, die länger ist als die bestimmte Breite, nicht nur die Position dieses Pulses, sondern auch die Position eines maskierten Pulses identifiziert wird, wobei die Position des maskierten Pulses von der ansteigenden oder der abfallenden Flanke des analogen Pulses abgeleitet wird, der eine Dauer zu haben scheint, die länger ist als die bestimmte Breite, zu der die bestimmte Breite addiert oder von der sie subtrahiert wird,
und wobei die Übereinstimmung zwischen der Position der in dem Empfangssignal vorhandenen Pulse einerseits und der Position von potentiellen Datenpulsen der betrachteten Antwort andererseits anhand einer Toleranz getestet wird, die von der Präzision der Identifikation der Position der in dem Empfangssignal (SRC) vorhandenen Pulse abhängig ist.

3. Verfahren nach einem der vorherigen Ansprüche, wobei der Referenzwert auf einem Abweichungsmesssignal basiert.

4. Verfahren zum Decodieren einer Antwort, die in einem Empfangssignal eines sekundären Radars enthalten ist, mit mehreren in dem Empfangssignal verschachtelten Antworten, wobei jede Antwort gemäß einem bestimmten Protokoll angeordnete Datenpulse umfasst, wobei das Verfahren **dadurch gekennzeichnet ist, dass** für jede verschachtelte Antwort:
- ein Referenzwert nach einem der vorherigen Ansprüche durch Auswählen von Zeitfenstern bestimmt wird, die sich in einem nicht verschachtelten Teil der betrachteten Antwort befinden;
- ein Zeitfenster ausgewählt und der Mittelwert der in dem gewählten Zeitfenster befindlichen Samples bestimmt wird;
- ein Datenpuls jedes Mal decodiert wird, wenn der bestimmte Mittelwert zu einem gewissen Wertebereich gehört, die um den bestimmten Referenzwert zentriert sind.

5. Vorrichtung zum Bestimmen eines Referenzwertes einer Antwort, die in einem Empfangssignal (SRC) eines sekundären Radars enthalten ist, wobei mehrere Antworten in dem Empfangssignal verschachtelt sind, wobei die Antwort gemäß einem vorbestimmten Protokoll angeordnete Datenpulse umfasst, wobei die Vorrichtung wenigstens Folgendes umfasst:
- Mittel zum Identifizieren (IMP), in dem Empfangssignal (SRC), der Position der vorhandenen Datenpulse durch Erkennen von ansteigenden und/oder abfallenden Flanken in dem Empfangssignal;
- Mittel zum Identifizieren (STB) von stabilen Teilen an den in dem Empfangssignal (SRC) vorhandenen Pulsen;
- Mittel zum Bestimmen (FLT), für jede in dem Empfangssignal enthaltene Antwort, von potentiellen Positionen von Pulsen der betrachteten Antwort in den nicht verschachtelten Teilen der betrachteten Antwort;
- Mittel zum Auswählen von Zeitfenstern, wobei jedes Zeitfenster in dem Empfangssignal einen stabilen Teil (STB) eines Datenpulses identifiziert, dessen Position identifiziert wurde und dessen identifizierte Position mit einer bestimmten potentiellen Position des Datenblocks der Antwort übereinstimmt, wobei der Referenzwert der Wert ist, den die meisten aller in den gewählten Zeitfenstern befindlichen Samples des Empfangssignals annehmen.

## Claims

1. A method for determining a reference value for a response contained in a reception signal of a secondary radar, with a plurality of responses being interleaved in said reception signal, each response comprising a preamble that comprises pulses that are emitted at given positions and data pulses that are arranged according to a given protocol, said reception signal (SRC), which corresponds to the analogue signal received by the radar, being sampled over a period that is shorter than the duration of a pulse, said method comprising the following steps:
- identifying (IMP), in said reception signal (SRC), the position of each data pulse present by detecting rising and/or falling edges in said reception signal (SRC) and, when interleaving is present between a plurality of pulses, identifying the position of the first data pulse on the basis of a rising edge and identifying the position of the last data pulse on the basis of a falling edge;
- identifying (STB) stable parts at the data pulses that are present in said reception signal (SRC);
- determining (FLT), for each response that is contained in said reception signal (SRC), potential positions of data pulses of the considered response located in the non-interleaved zones of said considered response;
- selecting, for each response that is contained in said reception signal (SRC), time windows, with each time window identifying, in said reception signal, a stable part (STB) of a data pulse, the position of which has been identified (IMP) and the identified position of which coincides with a given potential position (FLT);
- the reference value being the value that is mostly taken by all of the samples of said reception signal (SRC) located in the selected time windows.

2. The method according to the preceding claim, wherein the response comprises isolated data pulses having a given width, if said reception signal comprises a pulse that seems to have a longer duration than the given width, not only the position of this pulse but also the position of a hidden pulse are identified, said position of the hidden pulse being deduced from the rising edge or the falling edge of the analogue pulse that seems to have a longer duration than the given width, to which the given width is added or subtracted therefrom,
and wherein the coincidence is tested between the position of the pulses that are present in said reception signal, on the one hand, and the position of potential data pulses of the considered response, on the other hand, using a tolerance that is a function of the precision of the identification of the position of the pulses present in said reception signal (SRC).

3. The method according to any one of the preceding claims, wherein said reference value is based on a deviation measurement signal.

4. A method for decoding a response that is contained in a reception signal of a secondary radar, with a plurality of responses being interleaved in said reception signal and each response comprising data pulses that are arranged according to a given protocol, said method being **characterised in that**, for each interleaved response:
- a reference value according to any one of the preceding claims is determined by selecting time windows that are located in a non-interleaved part of the considered response;
- a time window is selected and the average value of the samples that are located in said selected time window is determined;
- a data pulse is decoded each time the given average value belongs to a certain range of values centred around the given reference value.

5. A device for determining a reference value of a response contained in a reception signal (SRC) of a secondary radar, with a plurality of responses being interleaved in said reception signal, the response comprising data pulses that are arranged according to a given protocol, said device comprising at least:
- means for identifying (IMP), in said reception signal (SRC), the position of the data pulses present by detecting rising and/or falling edges in said reception signal;
- means for identifying (STB) stable parts at the pulses that are present in said reception signal (SRC);
- means for determining (FLT), for each response that is contained in said reception signal, potential positions of pulses of the considered response in the non-interleaved parts of said considered response;
- means for selecting time windows, each time window identifying, in said reception signal, a stable part (STB) of a data pulse, the position of which has been identified and the identified position of which coincides with a given potential position of the data block of the response, the reference value being the value that is mostly taken by all of the samples of said reception signal located in the selected time windows.
